Europäisches Patentamt

(19) European Patent Office

Office européen des brevets

(11) Publication number: **0 105 910**
**B1**

(12) # EUROPEAN PATENT SPECIFICATION

(45) Date of publication of patent specification: **28.01.87**

(51) Int. Cl.⁴: **G 06 F 12/10**

(21) Application number: **83901538.5**

(22) Date of filing: **01.04.83**

(86) International application number:
**PCT/US83/00467**

(87) International publication number:
**WO 83/03704 27.10.83 Gazette 83/25**

(54) **MEMORY ADDRESS TRANSLATION SYSTEM.**

(30) Priority: **15.04.82 US 368786**

(43) Date of publication of application:
**25.04.84 Bulletin 84/17**

(45) Publication of the grant of the patent:
**28.01.87 Bulletin 87/05**

(84) Designated Contracting States:
**DE FR GB**

(56) References cited:
**FR-A-2 341 161**
**US-A-3 902 164**

**IBM Technical Disclosure Bulletin, volume 18,
no. 10, March 1976, New York (US). Heald:
"Address translation bypass", see pages 3373-
3375**

**IBM Technical Disclosure Bulletin, volume 22,
no. 4, September 1979, New York (US). Olbert:
"Fast DLAT Load for V = R address translators",
see page 1434**

(73) Proprietor: **NCR Corporation
World Headquarters
Dayton, Ohio 45479 (US)**

(72) Inventor: **MALIK, Ashgar Kamal
1276 Bear Valley Parkway
Escondido, CA 92027 (US)**
Inventor: **CELIO, John Anthony
12855 Prarie Dog Avenue
San Diego, CA 92126 (US)**
Inventor: **SANWO, Ikuo Jimmy
939 Lacebark Street
San Marcos, CA 92069 (US)**

(74) Representative: **Robinson, Robert George
International Patent Department NCR Limited
206 Marylebone Road
London NW1 6LY (GB)**

Courier Press, Leamington Spa, England.

## Description

Technical Field

This invention relates to a memory addressing system for a processor of the kind including buffer storage means adapted to temporarily store real and virtual addresses provided on a system bus, address translation means coupled to said buffer storage means and adapted to translate any one of a set of predetermined virtual addresses applied thereto into a corresponding real address and to provide a match signal when a translation takes place, and address register means coupled to said buffer storage means and to said address translation means and adapted to receive the contents of said buffer storage means or a translated address from said address translation means.

Background Art

Virtual addressing techniques are well-known in the computing age. Briefly, a main memory is limited in its storage capability, therefore, a second memory (bulk) such as a magnetic drum, tape or magnetic core matrix is provided. This additional memory is in all instances much larger than the main memory of the computer. This virtual or bulk memory is generally divided into parts that are referred to as segments. Each segment is further divided into contiguous and equal modules referred to as pages. Each page is addressable. In operation, pages of information from the bulk memory are addressed by the virtual address and are transferred into the main memory. The locations within main memory are addressed by real addresses. In large computing systems, a number of programs may be running simultaneously and pages from the bulk memory are called for and inserted into the main memory and removed therefrom when usage is no longer needed. Therefore, the addresses in main memory do not change where a virtually called-for page or segment can be located randomly throughout the main storage and swapped in and out of main storage as the pages are needed. The random location of segments and pages in main storage necessitates the translation of virtual addresses into real addresses using a table. The translation tables are typically stored in main memory. The accessing of the translation tables requires a significant amount of time which can degrade system performance. One approach that has been used is to store the translation information in a high speed associative store in order to reduce the number of accesses to main storage. The associative store is generally utilized to store the most recently used, or referenced, bulk data and the corresponding real addresses. Each time the virtual address is supplied by a processor for addressing the main store, search is made of the high speed associative store to determine whether or not rapid virtual-to-real address translation can be made using one of the entries stored therein.

A memory addressing system of the kind specified is known from U.S. Patent Specification No. 3,902,164.

According to this known system an additional register is used to hold a representation of a boundary in the main store below which virtual and real addresses are equal, so that translation is not required. A comparator compares each input address with the contents of the additional register and if the input address is less than the boundary value AND gating means are activated to transfer the input address directly to a storage address register, inhibit gating means being rendered effective to prevent the output of the address translator being entered in the storage address register. If the comparison indicates that the input address is greater or equal to the boundary address, the AND gating means and inhibit gating means are not activated and the output of the address translator is applied to the storage address register via the non-activated inhibit gating means. If under these conditions no match is detected by the address translator, a further AND gate is effective to cause the data processing unit to address a stored virtual address segment and page table to determine the actual location specified by the input address.

Although the known system improves address translation speeds the use of inhibit gating means for the output of the address translator does have the disadvantage of introducing some delay. Furthermore, the utilization of an additional register for the boundary value and a comparator has the further disadvantage of adding to the cost and complexity of the known system.

FR—A—2 341 161 discloses a memory addressing system wherein a changeover switch is utilised to by-pass an address translation means when a real instead of virtual address is present in an address register.

Disclosure of the Invention

It is an object of the present invention to provide a memory addressing system of the kind specified wherein the aforementioned disadvantages are alleviated.

The invention is defined in Claim 1.

It will be appreciated that utilization of the match signal to directly control the address register means enables the provision of a rapid, simple system whereby the use of inhibit gates, an additional register for storing a boundary value, and a comparator, may be avoided.

Brief Decription of the Drawings

One embodiment of the present invention will now be described by way of example with reference to the accompanying drawings, in which:

Fig. 1 is a block diagram of the preferred embodiment of the invention;

Fig. 2 is a transistor level schematic of a single bit of continuous dynamic address translation circuit;

Fig. 3 is a diagram of the continuous dynamic address translation circuit shown in Fig. 1;

Fig. 4 is an IC diagram of a buffer/latch circuit used in the preferred embodiment of Fig. 1;

Fig. 5 is an IC diagram illustrating the real memory address register used in the circuit shown in Fig. 1;

Fig. 6 is a waveform diagram illustrating the relationship of various clocking and bus signals with translation occurring; and

Fig. 7 is a waveform diagram illustrating the relationship of various clocking and bus signals with translation not occurring.

Best Mode for Carrying Out the Invention

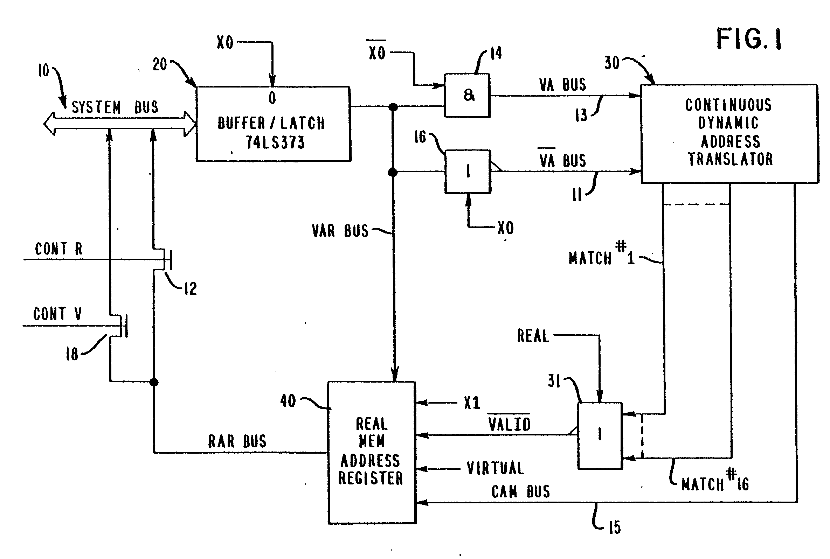

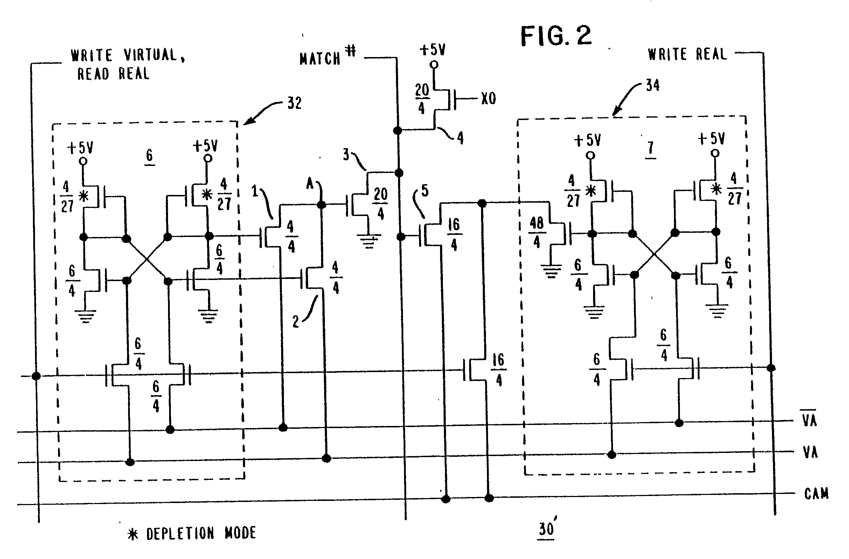

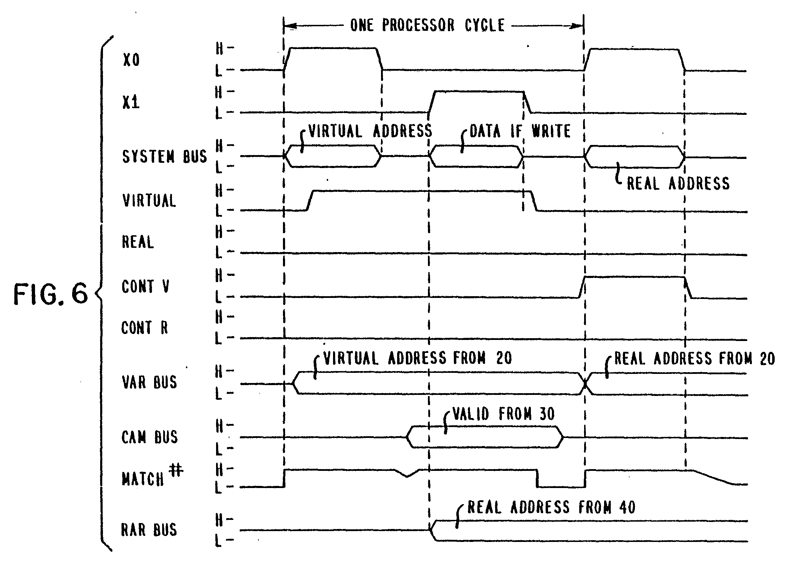

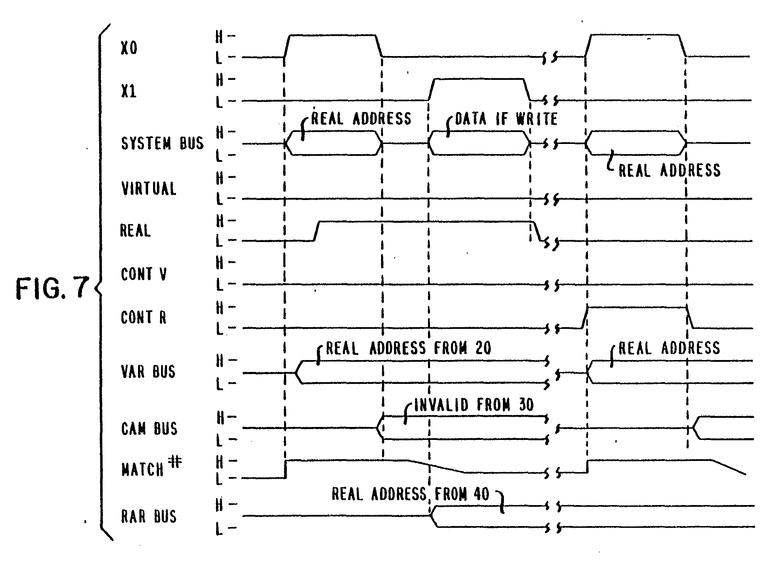

Referring to Fig. 1, there is shown in logic diagram form the preferred embodiment of the invention. A 32 bit system bus 10, on which address and/or data information appears, is coupled to the inputs of a buffer/latch 20. The buffer receives as one of its inputs a clocking signal $X_0$. Signals present on the system bus 10 are latched into buffer 20 upon the occurrence of a clocking pulse $X_0$. The latched signals are available at the output of the buffer latch. These signals are coupled, by means of a bus 13 and a bus 11, to the inputs of a continuous dynamic address translator 30. Interposed on buses 13 and 11 are 32 AND gates 14 and 32 NOR gates 16, respectively. During non-$X\emptyset$ time the signal on bus 13 is identical to the signal on bus 11 except for the fact that the signal on bus 11 is inverted. During $X\emptyset$ time both buses are held logically low. The output of the address translator 30 is coupled along a CAM bus 15 to the input of a real memory address register 40. When the computer, of which the present invention is a part, is operating with virtual addresses the processor firmware generates a flag signal called VIRTUAL. When the computer is operating only with real addresses the firmware generates a flag signal called REAL. Also signals called CONT R and CONT V are formed by gating segments of the signals REAL and VIRTUAL (illustrated in Figs. 6 and 7). Additionally, match lines numbered 1—16 and the control signal labeled REAL are directed to a NOR gate 31, the output of which goes valid when all inputs are of like level. The signal $\overline{\text{VALID}}$ is coupled to an input of the real memory address register to indicate that valid address data is present at its inputs. Additionally, the address register 40 receives as inputs the signal VIRTUAL, and a clocking signal $X_1$ along with being coupled to the buffer/latch 20 by means of a bus labeled VAR. The output of the address register 40 is transmittable onto the system bus 10 when either a gate 12 or a gate 18 is activated. Gate 12 can be activated with the signal identified as CONT R. Gate 18 is activated with the signal designated CONT V. The continuous dynamic address translator 30 is comprised of two major memory units, one a content addressable memory (CAM) and the other a random access memory (RAM) which will be decribed in more detail with the description of Fig. 2.

In the operation of the circuit of Fig. 1, referring as needed to the waveforms $X_0$ and $X_1$ of Fig. 6, in both the real and the virtual modes and all other potential modes, any information appearing on the system bus 10 is always clocked into the buffer/latch 20 at the occurrence of pulse $X_0$. Once the signals are latched into the latch, they are available at the inputs to the AND gates 14 and the NOR gates 16 and to the continuous dynamic address translator. The signals appearing on the VA bus and the $\overline{\text{VA}}$ bus received at the input of the dynamic address translator if they match, that is if a potential virtual address having a corresponding real address is stored within the memory unit, causes a translation, which outputs the real address onto the CAM bus 15. The translation is performed, that is, is attempted regardless of whether the address at the inputs to translator 30 was a virtual or a real address or even an address. If a match occurred, the output of the NOR gate 31 goes valid and the address register 40 is loaded with the information contained on CAM bus 15 if and only if, the information stored in buffer 20 upon the occurrence of clocking pulse X0 has subsequently been proven to be a virtual address (signal VIRTUAL becomes active). If no match occurred, indicating that the address was either real or there was an error of some sort, then at the $X_1$ clock the same address as received from the system bus and stored in latch 20 will be clocked into the real memory address register 40. At a later machine time, the contents of the real memory address register 40 are outputted onto the system bus 10 as part of the actual memory reference. The control signals CONT R and CONT V are enabled so as to transfer the address onto the system bus following either the real mode and/or virtual mode operation, respectively. In certain systems it may be desirable to implement this control via a single common signal.

As shown in Figs. 6 and 7, the real memory address enabled by CONT V is output during the next available $X\emptyset$ time. This is done for performance reasons. The real address on a non-translated (real or error) operation may be used as the memory address on a real mode operation and output as soon as possible or saved in the real address register 40 for diagnostic purposes at some other time on an error case by CONT R.

Referring now to Fig. 2 wherein a single bit slice of the continuous dynamic address translator 30 is disclosed in NMOS transistor (gate) circuits. In the preferred embodiment of the invention there are 16 groups (entries) each consisting of 32 bit slices. In addition, certain ones of the transistor circuits are marked with an asterisk indicating that they are of the depletion mode type. Adjacent to each of the gates, for fabrication purposes, is a fraction indicating the gate ratios (conductance ratios). The unit 1 indicates a ratio of surface width equal to surface length. The fractional numbers have the numerator equal to the width and the denominator equal to the length. The transistor gates 1—5 are transfer gates or logic switches. A high signal at the control input opens the gate and allows a signal to pass through. The MATCH line connected to gates 3, 4 and 5 is connected as an input to the NOR gate 31. In practice there are 16 of these match lines, one for each entry. The group of transistor devices 6 is a single bit of an entry in the content addressable memory (CAM) 32. Transistor devices 6 form a static CAM latch which is loaded from the VA and $\overline{VA}$ lines when the signal called "WRITE VIRTUAL READ REAL" is enabled. This signal is not active during a translation operation, it is active only when an entry in the CAM is being built. However, even while the CAM is being loaded, the continuous translation feature of the overall circuit is still in operation. The end result is that the attempted translation is disregarded because no translation was warranted at the time that the entry into the CAM memory was built. The group of transistor devices 7 is a single-bit of an entry in the random access memory (RAM) 34 portion of the dynamic address translator 30. The memory portion 34 is accessed with real addresses. Transistor devices 7 form a static RAM latch which is loaded from the VA and $\overline{VA}$ lines when the signal called "WRITE REAL" is enabled. This signal is inactive during an actual address translation operation. During all $X_0$ times, that is, when the $X_0$ pulses are positive, an address is potentially being transferred over the system bus 10 and stored in the buffer latch. At that time the MATCH line is held high by the application of +5 volts through gate 4. The gate pulls the MATCH line towards +5 volts during each $X_0$ time to eliminate the electrical charge time delays associated with conventional NMOS switches. During the non-$X_0$ time, the MATCH lines will discharge towards ground level unless an actual match occurred. In that instance, the MATCH line or lines as the case may be, will remain high. While the MATCH lines are being pulled high during $X_0$, the VA and $\overline{VA}$ terms from the AND gates 14 and NOR gates 16 are held at a logical 0 (low) level. This is accomplished on the AND gates by the $\overline{X\emptyset}$ term which is the invert of the $X\emptyset$ clock, and on the NOR gates by the $X\emptyset$ term. This guarantees that the "wire-OR-ed" connection A between the gates 1 and 2 will be low because one or the other of the two control inputs to gate 1 or gate 2 must be active since they represent both polarities of the data bit in the CAM latch. Either gate 1 or gate 2 must be open. A low input on the control terminal of gate 3 will ensure that the MATCH line is not pulled towards ground via gate 3 while gate 4 is attempting to precharge it to a high level.

Following the $X_0$ clock, when the address for the potential translation is guaranteed to be stable on the VA and $\overline{VA}$ lines, gates 1 and 2 act as an Exclusive-OR circuit. If the contents of the CAM latch do not match the value of the information on the VA and $\overline{VA}$ lines, then the wired OR connection at gates 1 and 2 will be high, thus enabling gate 3. Gate 3 is connected to ground and when enabled will pull the MATCH line low indicating that there is no valid entry for that address bit. Multiple CAM entry bits, 32 per entry, are wired-ORed at the MATCH line connection for as many bits as are required in the translation. Again in this embodiment, 16 MATCH lines were used so there are 16 sets of 32 bit slices each. Any mismatch on any one of the circuits will cause the corresponding gate 3 to pull the common MATCH line low. If the comparison on the CAM bit and the VA and $\overline{VA}$ bits match for all translated address bits, then none of the MATCH disable gate 3 transistors will draw the MATCH line to 0 and the MATCH line will therefore remain high. When the MATCH line is high, the gate 5 is enabled so as to transfer the information stored in a corresponding RAM latch onto the CAM bus.

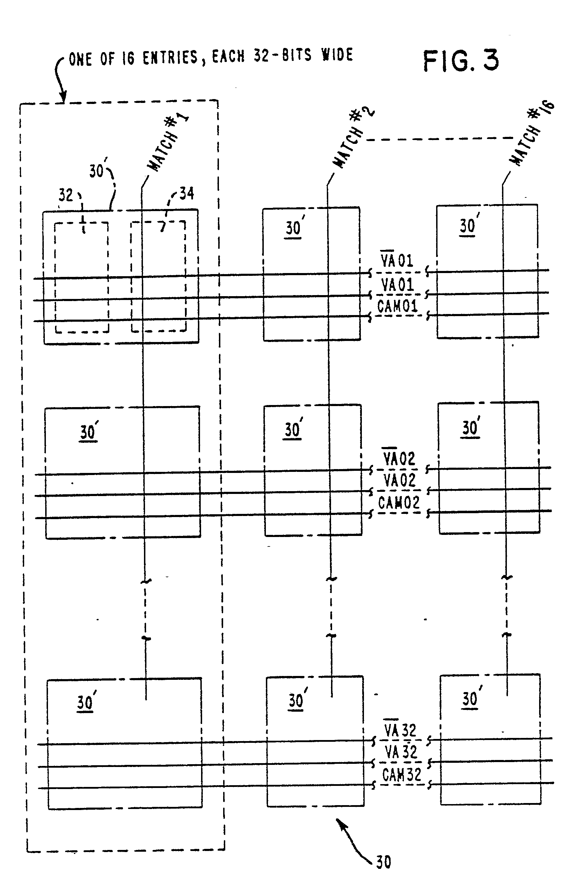

Referring to Fig. 3, the continuous dynamic address translator 30 is shown comprised of a matrix of single bit slice circuits 30'. There are 16 entries each having a corresponding MATCH line. The full translator is 32 bits wide.

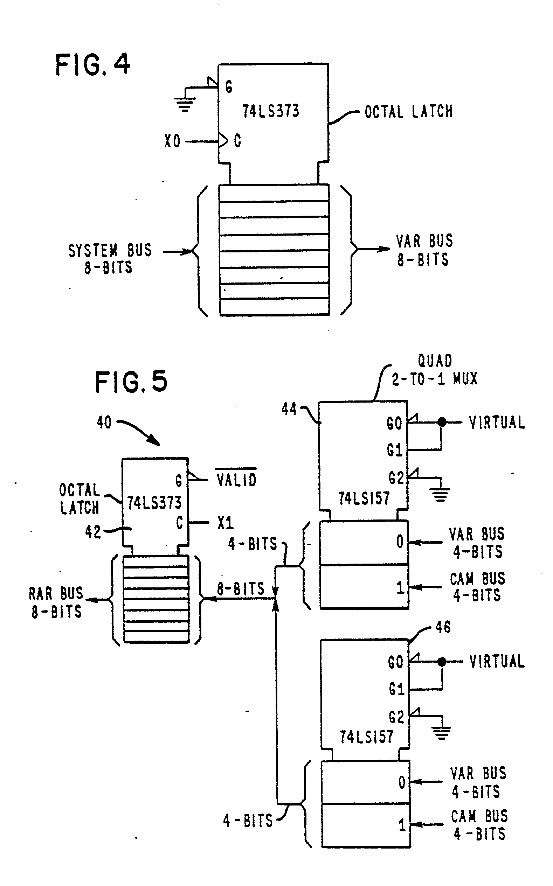

Referring to Fig. 4, the buffer/latch 20 is comprised of four octal latches of the type manufactured under Part No. SN74LS373 by Texas Instruments.

Referring to Fig. 5, the real memory address register 40 is shown comprised of four octal latches 42 coupled to eight 2-to-1 multiplexers (44 and 46) in the configuration shown; Fig. 5 repeated four times for each of the 8-bits of the 32 bit bus. The multiplexers 44 and 46 are of the type manufactured under Part No. SN74LS157 by Texas Instruments.

In Fig. 6 the waveforms depict a timing sequence for a virtual address to a real address translation.

In Fig. 7 the waveforms depict a timing sequence corresponding to the receipt of a real address which bypasses the translation operation.

**Claims**

1. A memory addressing system for a processor, including buffer storage means (20) adapted to temporarily store real and virtual addresses provided on a system bus (10), address translation means (30) coupled to said buffer storage means (20) and adapted to translate any one of a set of predetermined virtual addresses applied thereto into a corresponding real address and to provide a match signal when a translation takes place, and address register means (40) coupled to said buffer storage means (20) and to said address translation means (30) and adapted to receive the contents of said buffer storage means (20) or a translated address from said address translation means (30), characterized in that said buffer storage means (20) is rendered operative to store an applied address in response to a timing signal ($X_0$), in that first gating means (14, 16) responsive to said timing signal ($X_0$) are connected between said buffer storage means (20) and said address translation means (30), in that said address register means (40) is responsive to the provision of a first control signal (VIRTUAL) generated by the processor and indicative of a virtual address provided on said system bus (10) to receive a real address provided by said address translation means (30) and is responsive to the absence of said first control signal to receive the contents of said buffer storage means (20), and in that there are provided second gating means (31) responsive to said match signal and to a second control signal (REAL) generated by the processor and indicative of a real address provided on said system bus (10) to provide a third control signal ($\overline{\text{VALID}}$) indicative of valid address data provided by said address translation means (30) or by said buffer storage means (20) and applied to said address register means (40) to enable the output thereof.

2. A memory addressing system according to claim 1, characterized by gating means (12, 18) adapted to couple the contents of said address register means to said system bus (10) at a predetermined time.

3. A memory addressing system according to claim 1, characterized in that said address translation means (30) includes a content addressable memory element (32) responsive to a virtual address bit provided by said buffer storage means (20) and a random access memory element (34) arranged to store a real address bit and to provide said real address bit as an output in response to a signal from said content addressable memory element (32).

4. A memory addressing system according to claim 1, characterized in that said address register means (40) includes latching means (42), and multiplexer means (44, 46), said multiplexer means (44, 46) having first input means coupled to said address translation means (30), second input means coupled to said buffer storage means (20), and output means coupled to said latching means (42).

**Patentansprüche**

1. Speicheradressiersystem für einen Prozessor mit einer Pufferspeichervorrichtung (20), die geeignet ist, zeitweise reelle und virtuelle Adressen zu speichern, die auf einer Systemsammelleitung (10) vorhanden sind, einer Adressenübersetzungsvorrichtung (30), die mit der Pufferspeichervorrichtung (20) gekoppelt und geeignet ist, irgendeine einer Gruppe von vorbestimmten an sie angelegten virtuellen Adressen in eine entsprechende reele Adresse zu übersetzen und ein Übereinstimmungssignal abzugeben, wenn eine Übersetzung stattfindet, und einer Adressenregistervorrichtung (40), die mit der Pufferspeichervorrichtung (20) und Adressenübersetzungsvorrichtung (30) gekoppelt und geeignet ist, den Inhalt der Pufferspeichervorrichtung (20) oder eine übersetzte Adresse von der Adressenübersetzungsvorrichtung (30) zu empfangen, dadurch gekennzeichnet, daß die Pufferspeichervorrichtung (20) unter Ansprechen auf ein Zeitgabesignal ($X_0$) zur Speicherung einer angelegten Adresse aktiviert wird, daß auf das Zeitgabesignal ($X_0$) ansprechende erste Tor-

vorrichtungen (14, 16) zwischen die Pufferspeichervorrichtung (20) und die Adressenübersetzungsvorrichtung (30) geschaltet sind, daß die Adressenregistervorrichtung (40) anspricht auf die Abgabe eines von dem Prozessor erzeugten ersten Steuersignals (VIRTUAL) und eine auf der Systemsammelleitung (10) vorhandene virtuelle Adresse anzeigt, um eine von der Adressenübersetzungsvorrichtung (30) abgegebene reele Adresse zu empfangen, und anspricht auf die Abwesenheit des ersten Steuersignals, um den Inhalt der Pufferspeichervorrichtung (20) zu empfangen, und daß zweite Torvorrichtungen (31) vorgesehen sind, die auf das Übereinstimmungssignal und ein zweites von dem Prozessor erzeugtes Steuersignal (REAL) ansprechen und eine auf der Systemsammelleitung (10) vorhandene reelle Adresse anzeigen, um ein drittes Steuersignal ($\overline{\text{VALID}}$) abzugeben, das von der Adressenübersetzungsvorrichtung (30) oder der Pufferspeichervorrichtung (20) abgegebene und an die Adressenregistervorrichtung (40) angelegte gültige Adressendaten anzeigt, um den Ausgang der Adressenregistervorrichtung (40) zu aktivieren.

2. Speicheradressiersystem nach Anspruch 1, gekennzeichnet durch Torvorrichtungen (12, 18), die geeignet sind, den Inhalt der Adressenregistervorrichtung zu einem vorbestimmten Zeitpunkt an die Systemsammelleitung (10) zu koppeln.

3. Speicheradressiersystem nach Anspruch 1, dadurch gekennzeichnet, daß die Adressenübersetzungsvorrichtung (30) ein inhaltadressierbares Speicherelement (32), das auf ein von der Pufferspeichervorrichtung (20) abgegebenes Virtuelladressenbit anspricht, und ein Speicherelement (34) mit wahlfreiem Zugriff aufweist, das angeordnet ist, um ein Reelladressenbit zu speichern und das Reelladressenbit als ein Ausgangssignal unter Ansprechen auf ein Signal von dem inhaltadressierbaren Speicherelement (32) abzugeben.

4. Speicheradressiersystem nach Anspruch 1, dadurch gekennzeichnet, daß die Adressenregistervorrichtung (40) eine Haltevorrichtung (42) und eine Multiplexervorrichtung (44, 46) aufweist, wobei die Multiplexervorrichtung (44, 46) eine erste Eingangsvorrichtung, die mit der Adressenübersetzungsvorrichtung (30) gekoppelt ist, eine zweite Eingangsvorrichtung, die mit der Pufferspeichervorrichtung (20) gekoppelt ist und eine Ausgangsvorrichtung aufweist, die mit der Haltevorrichtung (42) gekoppelt ist.

**Revendications**

1. Système d'adressage de mémoire pour un processeur comprenant une mémoire tampon (20) conçue pour mémoriser temporairement des adresses réelles et virtuelles appliquées à un bus (10) du système, des moyens (30) de traduction d'adresse couplés à ladite mémoire tampon (20) et conçus pour traduire l'une quelconque des adresses virtuelles prédéterminées d'un groupe, appliquée à ces moyens, en une adresse réelle correspondante et pour produire un signal de correspondance lorsqu'une traduction a lieu, et un registre d'adresses (40) couplé à ladite mémoire tampon (20) et auxdits moyens (30) de traduction d'adresse et conçu pour recevoir le contenu de ladite mémoire tampon (20) ou une adresse traduite provenant desdits moyens (30) de traduction d'adresse, caractérisé en ce que ladite mémoire tampon (20) est rendue active pour mémoriser une adresse appliquée en réponse à un signal de synchronisation ($X_0$), en ce que des premiers moyens de déclenchement (14, 16), réagissant audit signal de synchronisation ($X_0$), sont connectés entre ladite mémoire tampon (20) et lesdits moyens (30) de traduction d'adresse, en ce que ledit registre (40) d'adresses réagit à la présence d'un premier signal de commande (VIRTUEL), généré par le processeur et représentatif d'une adresse virtuelle appliquée audit bus (10) du système, en recevant une adresse réelle produite par lesdits moyens (30) de traduction d'adresse et réagit à l'absence dudit premier signal de commande en recevant le contenu de ladite mémoire tampon (20), et en ce qu'il est prévu des seconds moyens de déclenchement (31) qui, en réponse audit signal de correspondance et à un second signal de commande (REEL), généré par le processeur et représentatif d'une adresse réelle appliquée audit bus (10) du système, produit un troisième signal de commande (VALIDE) représentatif d'une donnée d'adresse valide produite par lesdits moyens (30) de traduction d'adresse ou par ladite mémoire tampon (20), et appliquée audit registre d'adresses (40) pour en valider la sortie.

2. Système d'adressage de mémoire selon la revendication 1, caractérisé par des moyens de déclenchement (12, 18) conçus pour appliquer le contenu dudit registre d'adresse audit bus (10) du système à un instant prédéterminé.

3. Système d'adressage de mémoire selon la revendication 1, caractérisé en ce que lesdits moyens (30) de traduction d'adresse comprennent un élément de mémoire associative (32) réagissant à un bit d'adresse virtuelle produit par ladite mémoire tampon (20), et un élément de mémoire vive (34) agencé pour mémoriser un bit d'adresse réelle et pour produire ledit bit d'adresse réelle en sortie en réponse à un signal provenant dudit élément (32) de mémoire associative.

4. Système d'adressage de mémoire selon la revendication 1, caractérisé en ce que ledit registre d'adresse (40) comprend une bascule (42) et des moyens multiplexeurs (44, 46), lesdits moyens multiplexeurs (44, 46) comportant des premiers moyens d'entrée couplés auxdits moyens (30) de traduction d'adresse, des seconds moyens d'entrée couplés à ladite mémoire tampon (20) et des moyens de sortie couplés à ladite bascule (42).

FIG.1

FIG. 2

* DEPLETION MODE

ONE OF 16 ENTRIES, EACH 32-BITS WIDE    FIG. 3

3

# FIG. 4

- G
- 74LS373
- OCTAL LATCH
- X0 — C
- SYSTEM BUS 8-BITS
- VAR BUS 8-BITS

# FIG. 5

- 40
- OCTAL LATCH 74LS373
- 42
- G — VALID
- C — X1
- RAR BUS 8-BITS
- 4-BITS
- 8-BITS
- QUAD 2-TO-1 MUX
- 44
- 74LS157
- G0 — VIRTUAL
- G1
- G2
- 0 — VAR BUS 4-BITS
- 1 — CAM BUS 4-BITS
- 46
- 74LS157
- G0 — VIRTUAL
- G1
- G2
- 0 — VAR BUS 4-BITS
- 1 — CAM BUS 4-BITS
- 4-BITS

4

FIG. 6

FIG. 7

0 105 910